# EUROPÄISCHE PATENTSCHRIFT

(11) **EP 4 267 932 B1**
(45) Veröffentlichungstag und Bekanntmachung des Hinweises auf die Patenterteilung: **19.02.2025**
(21) Anmeldenummer: 21840500.9
(22) Anmeldetag: 15.12.2021
(51) Int. Cl.: G01M 17/10

(54) **RADTRÄGER ZUM TRAGEN EINES AN EINEM DREHGESTELL ANGEORDNETEN LAUFRADES UND PRÜFSTAND ZUR PRÜFUNG VON DREHGESTELLEN VON SCHIENENFAHRZEUGEN**
WHEEL SUPPORT FOR SUPPORTING A WHEEL MOUNTED ON A BOGIE, AND TEST STAND FOR TESTING BOGIES OF RAIL VEHICLES
PORTE-MOYEU POUR PORTER UNE ROUE MONTÉE SUR UN BOGIE, ET BANC D'ESSAI POUR TESTER DES BOGIES DE VÉHICULES FERROVIAIRES

(30) Priorität: 23.12.2020 WO PCT/EP2020/087793
(43) Veröffentlichungstag der Anmeldung: 01.11.2023
(73) Patentinhaber: Nencki AG, 4901 Langenthal (CH)
(72) Erfinder: BORER, Hans, 4573 Lohn-Ammannsegg (CH); SCHERTENLEIB, Thomas, 4900 Langenthal (CH)
(74) Vertreter: Keller Schneider Patent- und Markenanwälte AG
(86) Internationale Anmeldenummer: PCT/EP2021/086008
(87) Internationale Veröffentlichungsnummer: WO 2022/136066

(56) Entgegenhaltungen:
- EP-A2- 1 918 689
- EP-B1- 2 705 344
- KR-A- 20180 079 432

## Beschreibung

### Technisches Gebiet

Die Erfindung betrifft einen Radträger zum Tragen eines an einem Drehgestell angeordneten Laufrades und einen Prüfstand zur Prüfung von Drehgestellen von Schienenfahrzeugen, umfassend eine Tragvorrichtung mit mehreren solchen Radträgern zum Tragen jeweils eines am Drehgestell angeordneten Laufrads während eines Prüfungsvorgangs. Die Erfindung betrifft weiter ein Verfahren zum Prüfen eines Drehgestells eines Schienenfahrzeugs.

### Stand der Technik

Mit einem Drehgestellprüfstand werden verschiedene Parameter von Drehgestellen von Schienenfahrzeugen gemessen und geprüft. Insbesondere werden mittels einer Lasteinwirkeinheit entlang einer linearen Achse oder mehrerer linearer Achsen Kräfte auf das Drehgestell ausgeübt, um die im Betrieb zu erwartenden Einwirkkräfte aufgrund des Fahrzeuggewichts sowie statischer und dynamischer Einflüsse zu simulieren. Verschiedene Funktionen und Parameter, z. B. Radlasten, Achsdistanzen, Einfederung usw., werden dann geprüft bzw. bestimmt. Je nach Ausrüstung des Prüfstandes ist es möglich, den Achsabstand, die Achs-Parallelität, die Federung, den Radrundlauf, den Raddurchmesser usw. vollautomatisch zu prüfen.

Nach der Prüfung werden alle Werte in einer Datenbank gespeichert und können als Prüfprotokoll ausgedruckt werden. Die Daten können in ein übergeordnetes System transferiert werden.

Die Lasteinwirkeinheit übt lineare Kräfte auf das Drehgestell aus, üblicherweise vertikal nach unten gerichtete Kräfte. Hierzu wird mittels direkter Wegmessung eine definierte Position angefahren. Anschliessend wird kraftgesteuert die Kraft-Sollvorgabe angefahren. In der Regel sind zwei Lasteinwirkeinheiten vorhanden, die zur Anpassung an verschiedene Drehgestelldimensionen oder -geometrien entlang einer horizontalen Achse zueinander verschiebbar auf einem Querträger angeordnet sind. So können Kräfte simuliert werden, wie sie beispielsweise beim Durchfahren von Kurven auftreten.

Bekannte Lasteinwirkeinheiten umfassen hydraulische oder elektrische Lastzylinder. Hydraulische Lastzylinder sind z. B. als Differential-Hydraulikzylinder ausgebildet und umfassen ein Servoventil. Sie werden beispielsweise über einen Industrie-PC gesteuert. Solche Hydraulikzylinder sind empfindlich auf Querkräfte, die auf die Kolbenstange einwirken. Es ist deshalb in der Regel ein sogenanntes Hilfsjoch vorhanden, um Querkräfte aufzunehmen. Entsprechend ergeben sich trotz der eigentlich kostengünstigen Hydraulikzylinder für die Gesamtkonstruktion relativ hohe Kosten. Auch die Wartungs- und Instandhaltungskosten sind relativ hoch.

Eine Alternative stellen elektrische Lastzylinder dar. Sie sind beispielsweise als Hubspindelgetriebe mit Kugelgewindetrieb ausgebildet. Angetrieben werden sie von einem Synchronmotor, zu dessen Ansteuerung wird in der Regel ein spezifischer Antriebsverstärker eingesetzt. Allerdings sind derartige Antriebe und entsprechende Ersatzteile vergleichsweise teuer.

Damit verschiedene Drehgestellmodelle geprüft werden können, etwa Motor- und Laufdrehgestelle, verschiedene Spurweiten, 2- und 3-Achsen-Fahrwerke, können die relevanten Dimensionen des Prüfstands durch die manuelle oder automatisierte Verstellung einzelner Komponenten an die unterschiedlichen Erfordernisse angepasst werden.

Es sind Drehgestell-Prüfstände bekannt, die einzelne Radträger umfassen, wobei für die Prüfung jedes am Drehgestell angeordnete Laufrad von einem der Radträger getragen ist. Die Spurweite und der Achsabstand lassen sich durch eine entsprechende Verstellung der Radträger-Positionen einstellen. So zeigt z. B. die EP 1 918 689 B1 (Schenck Process GmbH) einen Drehgestell-Prüfstand mit einer höhenverstellbaren Einfahrgleisvorrichtung und mindestens vier Positioniereinheiten (Radträger) mit Aufnahmeprismen für die Laufräder. Das Drehgestell wird auf den Spurkränzen der Laufräder über die Einfahrgleisvorrichtung in den Prüfstand eingefahren, anschliessend wird die Einfahrgleisvorrichtung abgesenkt, so dass die Laufräder von den Aufnahmeprismen aufgenommen werden können. Die Positioniereinheiten umfassen einen unteren X-Schlitten, einen Y-Schlitten, eine höhenverstellbare Z-Hubeinrichtung und ein auf dem X-Schlitten angeordneter feinverstellender oberer X-Schlitten mit dem Aufnahmeprisma, der Messeinrichtung für die Radaufstandskraft und einem Abstandssensor.

Weitere gattungsgemässe Drehgestell-Prüfstände sind aus der EP 2 705 344 B1 und der EP 1 918 689 A2 der Firma Schenck Process GmbH, sowie aus der KR 2018 0079432 A der Firma Beijing Lead Time Sci & Tech Co LTD bekannt.

Bei bekannten Drehgestell-Prüfständen erfolgt das Einfahren des Drehgestells in den eigentlichen Prüfstand, auf den Einfahrgleisen, manuell, gegebenenfalls unterstützt durch eine Seil- bzw. Kabelwinde.

Der Aufbau solcher Radträger, mit mehreren senkrecht zueinander stehenden Linearführungen ist aufwendig, zumal diese Linearführungen den hohen aufzunehmenden Aufstandskräften entsprechend dimensioniert sein müssen.

### Darstellung der Erfindung

Aufgabe der Erfindung ist es, einen dem eingangs genannten technischen Gebiet zugehörenden Radträger zu schaffen, welcher eine einfache und mechanisch stabile Konstruktion aufweist.

Die Lösung der Aufgabe ist durch die Merkmale des Anspruchs 1 definiert. Gemäss der Erfindung umfasst der Radträger eine Hebeeinheit mit folgenden Komponenten:
- einer Plattform;
- einem ersten Linearschlitten, der entlang einer sich in einer Laufrichtung senkrecht zur Einwirkrichtung erstreckenden Längsführung verschiebbar ist;
- einem zweiten Linearschlitten, der in Laufrichtung entlang der Längsführung verschiebbar ist;
- einem ersten Hebelmechanismus zum Koppeln des ersten Linearschlittens an die Plattform; und
- einem zweiten Hebelmechanismus zum Koppeln des zweiten Linearschlittens an die Plattform.

Dabei ist ein Abstand zwischen dem ersten Linearschlitten und dem zweiten Linearschlitten veränderbar, so dass ein Abstand der Plattform vom ersten Linearschlitten und vom zweiten Linearschlitten in der Einwirkrichtung veränderbar ist.

Der Abstand der Plattform vom ersten Linearschlitten und vom zweiten Linearschlitten in der Einwirkrichtung ist aufgrund des ersten Hebelmechanismus und des zweiten Hebelmechanismus durch ein Verändern des Abstands zwischen dem ersten Linearschlitten und dem zweiten Linearschlitten veränderbar. Der erste Hebelmechanismus und der zweite Hebelmechanismus sind also derart ausgebildet, dass durch eine Veränderung des Abstands zwischen dem ersten Linearschlitten und dem zweiten Linearschlitten der Abstand der Plattform vom ersten Linearschlitten und vom zweiten Linearschlitten in der Einwirkrichtung veränderbar ist.

Der Abstand ist insbesondere dadurch veränderbar, dass der erste Linearschlitten und der zweite Linearschlitten entlang der Längsführung in Laufrichtung bzw. entgegen der Laufrichtung verschoben werden, wobei unterschiedliche Verschiebedistanzen zurückgelegt werden. Dabei kann einer der Linearschlitten feststehen und der andere Linearschlitten bewegt werden. Es können auch beide der Linearschlitten bewegt werden und zwar sowohl in gleicher Richtung (mit unterschiedlichem Weg) oder in entgegengesetzter Richtung (mit gleichem oder unterschiedlichen Weg).

Bevorzugt sind zwei Lasteinwirkeinheiten vorhanden, die zur Anpassung an verschiedene Drehgestelldimensionen oder -geometrien entlang einer horizontalen Achse zueinander verschiebbar auf einem Querträger angeordnet sind.

Der erfindungsgemässe parallel kinematische Mechanismus ermöglicht Bewegungen sowohl in Laufrichtung (X-Achse) als auch in Einwirkrichtung (Z-Achse), wobei vom Drehgestell auf die Laufräder ausgeübte Kräfte im Wesentlichen unabhängig von der X-und Z-Position bestmöglich aufgenommen werden können. Verglichen mit der aus dem Stand der Technik bekannten seriellen Anordnung wird somit für die entsprechenden Freiheitsgrade nur ein Mechanismus benötigt. Daraus ergibt sich eine einfachere Konstruktion und eine verbesserte Kraftaufnahme.

Wie nachfolgend dargelegt, wird der Abstand zwischen der Plattform einerseits und den Linearschlitten (bzw. der Längsführung) andererseits zu unterschiedlichen Zwecken eingestellt. Dazu zählen beispielsweise das Ergreifen und Freigeben eines Laufrads des zu prüfenden Drehgestells, das Abheben des Drehgestells von einer Einlaufschiene, die Anpassung an unterschiedliche Rad- und/oder Drehgestellgeometrien oder die Durchführung bestimmter Prüfungen, die eine aktive unabhängige Höhenverstellung der einzelnen Räder erfordern.

Die Bewegung der Linearschlitten entlang der Längsführung dient nicht nur der Höhenverstellung der Plattform, sondern kann auch anderen Zwecken dienen, so der Anpassung der Radträgerpositionen an die Dimensionen des Drehgestells (z. B. an den Achsabstand), dem Einziehen des Drehgestells in die Vorrichtung und/oder der Zentrierung des Drehgestells unter der Lasteinwirkeinheit.

Bevorzugt umfasst der erste Hebelmechanismus zwei Gelenkvierecke, und der zweite Hebelmechanismus umfasst zwei weitere Gelenkvierecke, wobei sich die Hebelachsen aller Hebel der Gelenkvierecke parallel zueinander und senkrecht zur Laufrichtung erstrecken. Die Hebel sind bevorzugt alle gleich lang, so dass jeweils zwei Hebel ein Parallelogramm definieren. Dies ermöglicht eine besonders einfache und stabile Konstruktion, wobei die Parallelität der Plattform zur Längsführung ohne weitere Massnahmen sichergestellt werden kann.

Die Hebelachsen erstrecken sich bevorzugt senkrecht zur Laufrichtung. Insbesondere verläuft die Längsführung vorteilhafterweise in horizontaler Richtung, während die Einwirkrichtung vertikal nach unten gerichtet ist und die Hebelachsen horizontal, quer zur Laufrichtung, verlaufen.

Mit Vorteil sind die zwei Gelenkvierecke des ersten Hebelmechanismus in einer Richtung der Hebelachsen voneinander beabstandet, und die zwei Gelenkvierecke des zweiten Hebelmechanismus sind ebenfalls in einer Richtung der Hebelachsen voneinander beabstandet.

Ein möglichst grosser Abstand zwischen den beiden Gelenkvierecken ist von Vorteil, weil dadurch die Stabilität der Konstruktion verbessert wird, insbesondere bei Einwirkkräften, die nicht mittig auf die Plattform des Radträgers einwirken. Besonders bevorzugt sind die zwei Gelenkvierecke des ersten Hebelmechanismus und die zwei Gelenkvierecke des zweiten Hebelmechanismus jeweils beidseitig der jeweiligen Plattform angelenkt. So ergibt sich ein maximaler Abstand, ohne die Baubreite der Vorrichtung massgeblich zu vergrössern.

Alternativ können die beabstandeten Gelenkvierecke auf der Unterseite der Plattform angelenkt sein.

Anstelle der Gelenkvierecke lassen sich die Radträger auch mit einzelnen Hebeln realisieren, insbesondere wenn am Radträger für die Plattform zusätzlich eine lineare Führung entlang der Einwirkrichtung angeordnet wird.

Vorzugsweise sind der erste Linearschlitten und der zweite Linearschlitten durch eine Einrichtung zur Verstellung ihres Abstands zueinander mechanisch miteinander verbunden. So lässt sich der Abstand zwischen den Linearschlitten und damit der Abstand der Plattform von den Linearschlitten präzise und einfach einstellen. Bevorzugt dient der Mechanismus zudem zur Aufnahme von Kräften in Richtung der Längsführung. Insbesondere führen die vom Drehgestell auf die Plattform einwirkenden Kräfte zu einander entgegengesetzten axialen Kräften parallel bzw. anti-parallel zur Laufrichtung. Mit einem verbindenden Mechanismus, der diese Kräfte ganz oder teilweise aufnehmen kann, wird vermieden, dass die Kräfte von den Linearschlitten auf die Linearführung übertragen werden. Die Linearschlitten übertragen somit primär Kräfte parallel zur Einwirkrichtung auf die Linearführung bzw. ihre Tragstruktur.

Mit Vorteil umfasst die Einrichtung zur Verstellung des Abstands eine
a) an einem der Linearschlitten drehbar und axial unverschiebbar gelagerte Gewindespindel, deren Drehachse sich in Laufrichtung erstreckt, und
b) einen drehbaren Mitnehmer, der am anderen der Linearschlitten angeordnet ist.

Mittels einer Drehbewegung der Gewindespindel lässt sich somit der andere Linearschlitten gegenüber dem ersten Linearschlitten in Richtung der Spindeldrehachse bewegen. Der drehbare Mitnehmer ist am anderen Linearschlitten insbesondere drehbar, aber axial unverschiebbar gelagert, und er umfasst ein Innengewinde, das mit einem Aussengewinde der Gewindespindel zusammenwirkt.

Gewindespindeln sind bei entsprechender Auslegung geeignet zur Aufnahme hoher Kräfte und ermöglichen eine präzise und stufenlose Einstellung des Abstands der beiden Linearschlitten.

Besonders bevorzugt bilden die Gewindespindel und der Mitnehmer einen Kugelgewindetrieb. Dadurch lässt sich die Reibung zwischen den Komponenten minimieren, wodurch sich insbesondere ein geringeres Losbrechmoment ergibt und der Verschleiss reduziert wird.

Grundsätzlich sind auch andere Spindeltriebe mit geeignet ausgelegter Spindel und Lagern einsetzbar.

Alternativ verfügen die beiden Linearschlitten über unabhängige Antriebe, so dass sie unabhängig voneinander entlang der Längsführung verstellt und positioniert werden können. In diesem Fall sind Mittel zur Aufnahme der erwähnten Kräfte in Laufrichtung vorzusehen.

Mit Vorteil ist am ersten Linearschlitten ein Antriebsmotor angeordnet, dessen Abtrieb auf ein Ritzel wirkt, wobei das Ritzel zum Verschieben des ersten Linearschlittens mit einer sich in Laufrichtung erstreckenden Zahnstange zusammenwirkt. Zahnstangenantriebe ermöglichen eine präzise Positionierung und grosse Wege, und der schienenseitige Bauteilaufwand ist minimiert. Insbesondere werden an den Enden des Verschiebeweges keine aufwendigen Komponenten benötigt.

Beim Antriebsmotor handelt es sich insbesondere um einen Servomotor. Bei Ausführungsformen mit einer Spindel zur Verstellung des Abstands zwischen den Linearschlitten können der Antriebsmotor für die Spindel und der Antriebsmotor für den Ritzel-Zahnstangentrieb am selben Linearschlitten angeordnet sein, oder der Antriebsmotor für den Ritzel-Zahnstangentrieb ist am ersten Linearschlitten angeordnet, während der Antriebsmotor für die Spindel am zweiten Linearschlitten angeordnet ist.

Anstelle einer Ritzel-Zahnstangenanordnung sind andere Antriebe einsetzbar, z. B. Spindeltriebe, Gurten- oder Kettenantriebe, Linearantriebe usw.

Ein erfindungsgemässer Prüfstand zur Prüfung von Drehgestellen von Schienenfahrzeugen umfasst eine Tragvorrichtung zum Tragen eines Drehgestells während eines Prüfungsvorgangs, umfassend mehrere erfindungsgemässe Radträger zum Tragen jeweils eines am Drehgestell angeordneten Laufrades.

In einer ersten Ausführungsform umfasst der Prüfstand eine Lasteinwirkeinheit zur Erzeugung einer linearen Einwirkkraft auf das Drehgestell, umfassend eine Krafterzeugungseinheit zur Erzeugung einer Grundkraft und eine Übertragungseinrichtung zur Übertragung der Grundkraft in die in einer Einwirkrichtung ausgerichtete, auf das Drehgestell einwirkende Einwirkkraft. Damit lässt sich ein einzelnes Drehgestell prüfen.

In einer zweiten Ausführungsform umfasst die Tragvorrichtung des Prüfstands mindestens acht erfindungsgemässe Radträger, um alle Laufräder mindestens zweier an einem Wagenkasten angeordneter Drehgestelle zu tragen. Es können somit alle Laufräder zweier an einem Wagenkasten angeordneter Drehgestelle gleichzeitig von entsprechenden Radträgern aufgenommen werden. Danach erfolgt insbesondere eine Verwindungsprüfung durch eine Einstellung unterschiedlicher Höhen der Radträger, wobei die lineare Einwirkkraft mittels eines Eigengewichts des Wagenkastens ausgeübt wird.

Mit Hilfe der erfindungsgemässen, entlang der Längsführung verschieblichen Radträger lässt sich auf einfache Weise ein Abstand zweier Gruppen von Radträgern auf einen Abstand der Drehgestelle am Wagenkasten einstellen.

Mit Vorteil umfasst der Prüfstand zwei parallel angeordnete, sich in Laufrichtung erstreckende Einlaufschienen zur Zuführung des zu messenden Drehgestells. Das Drehgestell kann dann mittels der Laufräder, insbesondere durch Abrollen auf dem Spurkranz, auf einfache Weise in Laufrichtung der Prüfposition zugeführt werden.

Die Einlaufschienen müssen hohe Kräfte in Einwirkrichtung aufnehmen. Bevorzugt sind deshalb die Einlaufschienen in vertikaler Richtung und in Laufrichtung fest angeordnet. Dadurch erübrigt sich eine Baugruppe zur Höhenverstellung der Einlaufschienen, die in der Lage sein müsste, die erwähnten hohen Kräfte in Einwirkrichtung aufzunehmen.

In Querrichtung kann mindestens eine der Einlaufschienen einstellbar gelagert sein, so dass der Prüfstand an verschiedene Spurbreiten angepasst werden kann. Entsprechende Einstellvorrichtungen lassen sich z. B. durch in Querrichtung verlaufende Linearführungen realisieren, auf denen Tragestrukturen der Einlaufschienen gelagert sind. Eine entsprechende Verstellung erfolgt üblicherweise relativ selten und kann manuell oder automatisch erfolgen.

Mit Vorteil sind die Längsführung und die Einlaufschienen derart angeordnet, dass auf den Plattformen der Radträger angeordnete Radaufnahmeeinrichtungen durch eine vertikale Bewegung der jeweiligen Plattform zwischen einer Eingriffsposition und einer Freigabeposition bewegbar sind, wobei in der Eingriffsposition Kräfte in Laufrichtung zwischen der jeweiligen Radaufnahmeeinrichtung und dem jeweiligen Rad übertragbar sind, während in der Freigabeposition der jeweilige Radträger bezüglich des Drehgestells in Laufrichtung frei beweglich ist.

In der Eingriffsposition kann das Drehgestell somit durch die koordinierte Bewegung der Radträger in Laufrichtung relativ zur Lasteinwirkeinheit positioniert werden.

Bevorzugt ist die Eingriffsposition so definiert, dass die Laufräder des Drehgestells mit ihren Laufflächen oder auf dem Spurkranz auf den Einlaufschienen abrollen können. Während der Positionierung des Drehgestells werden die vertikalen Kräfte somit weiterhin vollständig oder weitgehend von der Einlaufschiene aufgenommen.

Bevorzugt umfasst jeder der Radträger eine auf der Plattform angeordnete Radaufnahmeeinrichtung sowie eine Kraftmesseinheit zum Messen einer auf die Radaufnahmeeinrichtung ausgeübten Kraft.

Die Radaufnahmeeinrichtung umfasst mit Vorteil zwei drehbare Rollen zum Zusammenwirken mit der Lauffläche des jeweiligen Laufrades. Dies erleichtert das Verschieben des Drehgestells in der Eingriffsposition der Radaufnahmeeinrichtungen, während die Laufräder mit ihren Spurkränzen auf den Einlaufschienen abrollen. Besonders bevorzugt lässt sich zumindest eine der Rollen aktiv antreiben. So können statische Verformungen des Rads aufgrund der während des Prüfprozesses einwirkenden Kräfte vermieden werden. Ferner sind mit angetriebenen Rädern weitergehende Prüfungen möglich, die z. B. die Rundheit der Räder, die Zentrizität der Radlager oder ähnliches erfassen.

Anstelle von Rollen sind auch andere Elemente einsetzbar, z. B. prismenförmige Aufnahmen.

Ein erfindungsgemässes Verfahren zum Prüfen eines Drehgestells eines Schienenfahrzeugs umfasst folgende Schritte:
a) Einfahren des Drehgestells entlang einer Laufrichtung, indem Spurkränze von am Drehgestell angeordneten Laufrädern auf zwei parallelen Einlaufschienen ablaufen;
b) Positionieren des Drehgestells und mehrerer Radträger einer Tragvorrichtung zueinander, entlang der Laufrichtung, so dass jedem der Laufräder ein Radträger zugeordnet ist, wobei jeder der Radträger eine Hebeeinheit umfasst mit einer Plattform, einem ersten Linearschlitten, der entlang einer sich in Laufrichtung erstreckenden Längsführung verschiebbar ist, einem zweiten Linearschlitten, der in Laufrichtung entlang der Längsführung verschiebbar ist, einem ersten Hebelmechanismus zum Koppeln des ersten Linearschlittens an die Plattform und einem zweiten Hebelmechanismus zum Koppeln des zweiten Linearschlittens an die Plattform;
c) Ergreifen des Drehgestells, indem ein Abstand zwischen dem ersten Linearschlitten und dem zweiten Linearschlitten der Hebeeinheiten verringert wird, so dass die Radträger angehoben werden und die Laufräder im Bereich Ihrer Lauffläche ergreifen;
d) Anheben des Drehgestells, bis die Spurkränze der Laufräder von den Einlaufschienen abgehoben sind;
e) Prüfen des Drehgestells durch Ausüben einer linearen Einwirkkraft auf das Drehgestell, wobei die lineare Einwirkkraft senkrecht steht zur Laufrichtung, und Messen auf die Radträger einwirkender Kräfte.

Zum Prüfen eines einzelnen Drehgestells wird dieses durch Verfahren der Radträger entlang der Laufrichtung, in einer Einwirkposition einer Lasteinwirkeinheit positioniert. Die Einwirkkraft wird anschliessend durch eine Lastwirkeinheit ausgeübt. Das Drehgestell kann direkt in einer Übernahmeposition von allen Radträgern erfasst und zur Einwirkposition (Prüfposition) bewegt werden. In einer bevorzugten Ausführungsform werden zunächst nur die Laufräder des in Zuführrichtung vordersten Radpaares erfasst und zwar mit den in Zuführrichtung hintersten Radträgern. Das Drehgestell wird dann in Zuführrichtung mit Hilfe dieser zwei Radträger bewegt, bis ein Umsetzen der Radträger erfolgen kann. Dabei werden die Räder des ersten Radpaares wieder freigegeben, alle Radträger werden dann unter die jeweiligen Räder bewegt und angehoben, so dass das Drehgestell mit allen Rädern ergriffen und anschliessend zur Prüfposition bewegt werden kann. Bei dieser Ausführungsform kann der benötigte Fahrweg der Radträger entlang der Längsführung deutlich reduziert werden.

Das Einfahren der Drehgestelle kann auf die erfindungsgemässe Weise sicher und schnell erfolgen. Es ist weder notwendig, Antriebsmittel wie Seile oder Kabel einer Winde am Drehgestell anzubringen, noch das Drehgestell manuell zu positionieren, sondern die Positionierung kann aus sicherem Abstand veranlasst und überwacht werden. Entsprechend wird das Unfallrisiko minimiert.

Bei der Einwirkung von Einwirkkräften verformen sich typische Drehgestelle, namentlich ergibt sich eine geringfügige Vergrösserung des Achsabstands aufgrund der üblichen Schwingengeometrie. Deshalb sind bei der Prüfung des Drehgestells alle Linearschlitten mit Vorteil frei in Laufrichtung beweglich, während die Abstände zwischen den ersten Linearschlitten und den zweiten Linearschlitten jeweils eines Radträgers fixiert sind. Mit der Freigabe der Linearschlitten lässt sich der vergrösserte Achsabstand ohne Weiteres auffangen.

Bei einer bevorzugten Ausführungsform ist bei jedem der Radträger am ersten Linearschlitten ein Antriebsmotor angeordnet, dessen Abtrieb auf ein Ritzel wirkt, wobei das Ritzel zum Verschieben des ersten Linearschlittens mit einer sich in Laufrichtung erstreckenden Zahnstange zusammenwirkt, wobei für das Prüfen des Drehgestells das Ritzel zur freien Rotation freigegeben wird, insbesondere indem ein elektrischer Antriebsmotor für das Ritzel stromlos geschaltet wird.

Bei den Antriebsmotoren handelt es sich insbesondere um Servomotoren. Diese und allfällige nachgeschaltete Getriebe sind mit Vorteil so ausgebildet, dass im stromlosen Zustand des Motors nur geringe Bremskräfte auf den Abtrieb wirken. Alternativ kann eine schaltbare Kupplung zwischen Motor und Ritzel bzw. zwischen Getriebe und Ritzel zum Einsatz kommen.

Anstelle einer Ritzel-Zahnstangenanordnung sind andere Antriebe einsetzbar, z. B. Spindeltriebe, Gurten- oder Kettenantriebe usw.

Im Rahmen des erfindungsgemässen Verfahrens kann durch eine individuelle Einstellung der Höhen der Radträger das Einfügen von Unterlegscheiben simuliert werden.

Dadurch erübrigt sich das testweise Einfügen von Unterlegscheiben (shim plates) bis die korrekte Konfiguration gefunden ist. Die Einstellung bzw. Veränderung der Höhe der Radträger kann unter voller Last erfolgen, so dass die Simulation, Überprüfung und Verbesserung in einem iterativen Prozess ohne zeitliche Verzögerung erfolgen kann.

Auf ähnliche Weise, durch unterschiedliche Höheneinstellungen der Radträger, kann auch eine Verwindungsprüfung des Drehgestells erfolgen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein Schrägbild einer Ausführungsform des erfindungsgemässen Prüfstands für Drehgestelle von Schienenfahrzeugen, zu Beginn der Zuführung des Drehgestells;
- Fig. 2: ein Schrägbild der Tragvorrichtung für das Drehgestell;
- Fig. 3: ein Schrägbild einer Seite der Tragvorrichtung mit zwei Radträgern;
- Fig. 4: ein Schrägbild der Hebeeinheit eines Radträgers;
- Fig. 5: eine Querschnittansicht der Hebeeinheit im abgesenkten Zustand;
- Fig. 6: ein Schrägbild der Hebeeinheit in angehobenem Zustand;
- Fig. 7: ein Schrägbild zur Veranschaulichung des Zusammenwirkens einer Einlaufschiene und der Radaufnahmeeinrichtung des Radträgers mit einem Laufrad des Drehgestells;
- Fig. 8: ein Schrägbild des Prüfstands mit dem Drehgestell in der Prüfposition; und
- Fig. 9: eine Schemazeichnung einer weiteren Ausführungsform des erfindungsgemässen Prüfstands.

Grundsätzlich sind in den Figuren gleiche Teile mit gleichen Bezugszeichen versehen.

### Wege zur Ausführung der Erfindung

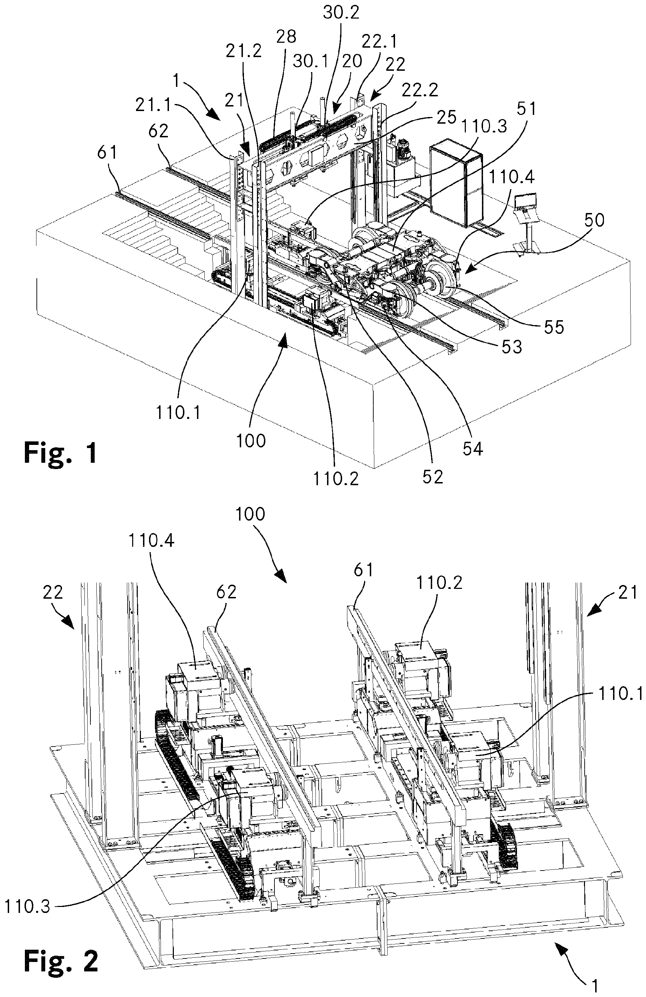

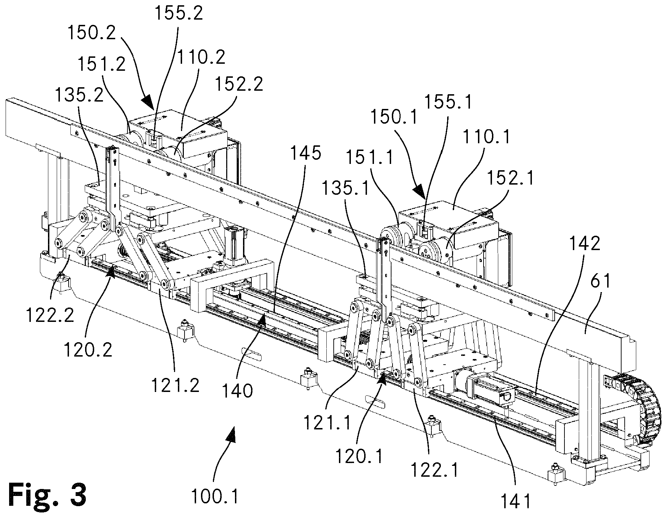

Die Figur 1 zeigt ein Schrägbild einer Ausführungsform des erfindungsgemässen Prüfstands für Drehgestelle von Schienenfahrzeugen, zu Beginn der Zuführung des Drehgestells. Die Figur 2 zeigt ein Schrägbild der Tragvorrichtung für das Drehgestell. Die Figur 3 zeigt ein Schrägbild einer Seite der Tragvorrichtung mit zwei Radträgern.

Der Prüfstand 1 umfasst zwei parallele Einlaufschienen 61, 62. Ihre Höhe ist fix vorgegeben, während eine der Einlaufschienen 61 in Querrichtung verstellbar, die andere auch in Querrichtung fix montiert ist.

Auf den Einlaufschienen 61, 62 wird das Drehgestell 50 in die Prüfposition des Prüfstands 1 eingefahren. Das Drehgestell 50 umfasst einen Drehgestellrahmen 51, an dem über Sekundärfedern 52 und Radlager 53 mit Primärfederung die Radachsen 54 mit den Rädern 55 des Drehgestells 50 gelagert sind.

Der Prüfstand 1 umfasst bei der Prüfposition ein Portal 20 mit zwei Stützen 21, 22, an denen vertikal entlang einer Linearführung verschieblich ein Querträger 25 gelagert ist. Jede der Stützen 21, 22 besteht aus zwei Vertikalträgern 21.1, 21.2; 22.1, 22.2, die parallel zueinander angeordnet sind. Die äusseren Enden des Querträgers 25 bewegen sich im Zwischenraum der jeweiligen Vertikalträger 21.1, 21.2; 22.1, 22.2. Die Linearführung umfasst vertikale Schienen und jeweils einen darauf verfahrbaren Schlitten, an dem der Querträger 25 befestigt ist. Auf jedem der Schlitten ist ein Antriebsmotor für eine Spindel angeordnet. Die beiden Spindeln verlaufen vom jeweiligen Schlitten ausgehend horizontal nach innen, parallel zum Querträger 25, und dienen zur Querverstellung von zwei am Querträger 25 über eine weitere Linearführung angeordnete Lasteinwirkeinheiten 30.1, 30.2. Die Lasteinwirkeinheiten 30.1, 30.2 sind identisch aufgebaut. Der Hub des Querträgers 25 an den Stützen 21, 22 beträgt ca. 1'000 mm, so dass die Lasteinwirkeinheiten 30.1, 30.2 mit unterschiedlichen Drehgestellen sowie Referenz-Messzellen zur Kalibrierung zusammenwirken können.

Die Lasteinwirkeinheiten 30.1, 30.2 umfassen jeweils eine Einrichtung zur Erzeugung einer nach unten gerichteten Grundkraft. Dabei kann es sich in an sich bekannter Weise um hydraulische oder elektrische Lastzylinder handeln oder bevorzugt um ein hybrides System mit einem doppelt wirkenden Hydraulikzylinder, dessen Zylinderkammern von einer bi-direktionalen Axialkolbenpumpe mit Hydraulikflüssigkeit beaufschlagt werden, wie in der hängigen Internationalen Patentanmeldung PCT/EP 2020/085560 vom 10. Dezember 2020 beschrieben.

An ihrem unteren Ende weisen die entsprechenden Kolbenstangen Übertragungsstücke auf, die zur Übertragung einer Einwirkkraft mit entsprechenden Einwirkpunkten am Drehgestell 50 zusammenwirken. Im dargestellten Beispiel befinden sich die Einwirkpunkte in Längsrichtung mittig auf dem Drehgestellrahmen und in Querrichtung jeweils in einer Ebene, die ungefähr durch die Mitte der Laufflächen der Räder der entsprechenden Seite definiert wird.

Der Querträger 25 umfasst weiter eine Versorgungsanordnung 28 mit Schleppketten zur Versorgung der Lasteinwirkeinheiten 30.1, 30.2 mit elektrischer Energie und Steuersignalen. Auch Sensorsignale von an den Lasteinwirkeinheiten 30.1, 30.2 angeordneten Sensoren werden über die Schleppketten der Versorgungsanordnung 28 zu einer Steuerungs- und/oder Auswertestation übertragen.

Der Prüfstand 1 umfasst weiter eine Tragvorrichtung 100 mit vier Radträgern 110.1, 110.2, 110.3, 110.4, wobei je zwei Radträger 110.1, 110.2 mit der ersten Einlaufschiene 61 und zwei Radträger 110.3, 110.4 mit der zweiten Einlaufschiene 62 zusammenwirken. In der Figur 1 ist eine Seite 100.1 der Tragvorrichtung 100 dargestellt.

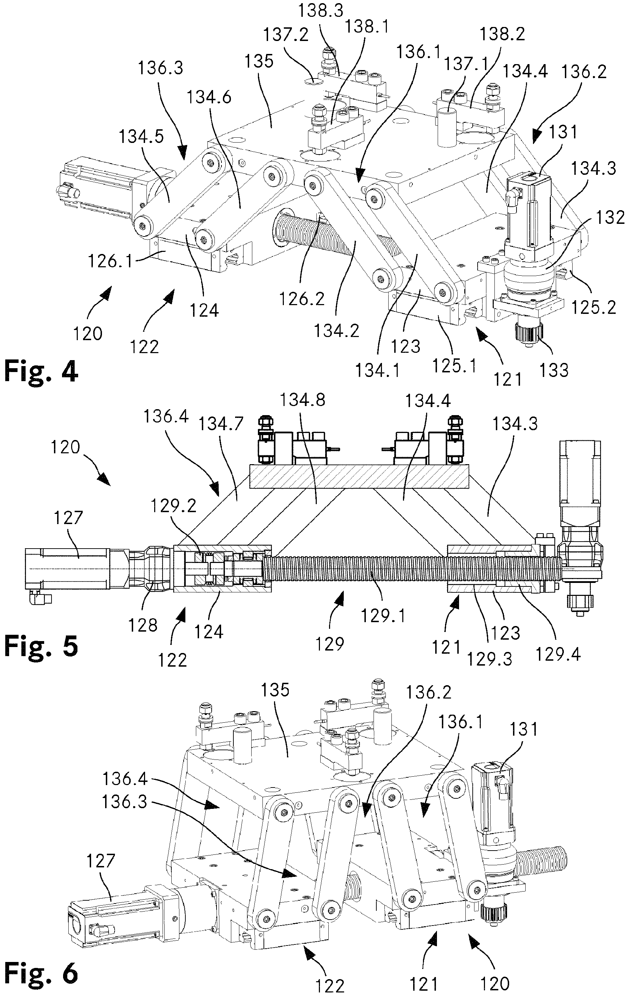

Jeder Radträger 110.1, 110.2, 110.3, 110.4 umfasst eine Hebeeinheit 120.1, 120.2 und eine darauf angeordnete Radaufnahmeeinheit 150.1, 150.2 (vgl. Figur 3). Die Hebeeinheit 120.1, 120.2 ist nachfolgend, im Zusammenhang mit den Figuren 4-6 näher beschrieben. Sie weist an ihrem oberen Ende u. a. eine Plattform 135.1, 135.2 auf, auf der die jeweilige Radaufnahmeeinheit 150.1, 150.2 gelagert ist. Die Radaufnahmeeinheit 150.1, 150.2 weist zwei drehbare Rollen 151.1, 152.1; 151.2, 152.2 auf, die von einem Servomotor in Drehung versetzt werden können. Ihre Drehachsen verlaufen horizontal und senkrecht zur Einlaufschiene 61. Die Radaufnahmeeinheit 150.1, 150.2 weist zudem einen Zentriermechanismus 155.1, 155.2 auf mit einem Stössel, der im Wesentlichen zwischen den Rollen 151.1, 152.1; 151.2, 152.2 angeordnet ist und von einem weiteren Servomotor über ein Planetengetriebe und einen Spindeltrieb entlang einer linearen Achse parallel zu den Drehachsen der Rollen 151.1, 152.1; 151.2, 152.2 bewegt werden kann.

Jede Hebeeinheit 120.1, 120.2 umfasst zwei Linearschlitten 121.1, 122.1; 121.2, 122.2, die auf einer Linearführung 140 parallel zur Einlaufschiene 61 beweglich gelagert sind. Die Linearführung 140 umfasst zwei parallele Profilschienen 141, 142. Parallel zu diesen ist eine Zahnstange 145 angeordnet. Jeweils einer der Linearschlitten 121.1, 121.2 trägt ein von einem Antriebsmotor angetriebenes Ritzel, das mit der Zahnstange 145 zusammenwirkt, um den jeweiligen Linearschlitten 121.1, 121.2 entlang der Linearführung 140 zu positionieren. Der jeweils andere Linearschlitten 122.1, 122.2 der Hebeeinheit 120.1, 120.2 ist über eine Spindel mit dem ersten Linearschlitten 121.1, 121.2 mechanisch verbunden. Dies ist weiter unten, im Zusammenhang mit den Figuren 4-6 näher beschrieben.

Die Kräfte, die von den beiden Lasteinwirkeinheiten 30.1, 30.2 auf das Drehgestell 50 ausgeübt werden, sind unabhängig voneinander steuerbar. Es lassen sich somit sowohl in Querrichtung symmetrische als auch asymmetrische Kräfte auf das Drehgestell 50 ausüben. Mittels geeigneter, an sich bekannter Messeinrichtungen lässt sich die Reaktion des Drehgestells 50 auf die einwirkenden Kräfte erfassen.

Die Figur 4 zeigt ein Schrägbild der Hebeeinheit eines Radträgers, die Figur 5 eine Querschnittansicht der Hebeeinheit im abgesenkten Zustand und die Figur 6 ein Schrägbild der Hebeeinheit in angehobenem Zustand. Die Hebeeinheit 120 umfasst zwei Linearschlitten 121, 122. Diese weisen jeweils einen Träger 123, 124 auf, an dessen Unterseite je zwei Führungswagen 125.1, 125.2; 126.1, 126.2 montiert sind. Diese umfassen jeweils mehrere Kugellaufbahnen, die im montierten Zustand des Radträgers mit Laufflächen der jeweiligen Profilschiene (vgl. Figur 3) zusammenwirken.

Am Träger 123 eines der Linearschlitten 121 ist an der äusseren Stirnseite ein Antriebsmotor 131 angeordnet. Es handelt sich dabei um einen Servomotor mit vertikal orientierter Antriebsachse. Letztere wirkt über ein Planetengetriebe 132 auf ein Ritzel 133. Dieses kämmt mit der parallel zur Linearführung verlaufenden Zahnstange (vgl. Figur 3). Der Antriebsmotor 131 ist so ausgebildet, dass der Abtrieb im Wesentlichen frei rotiert, wenn der Motor stromlos geschaltet ist.

Am Träger 124 des anderen Linearschlittens 122 ist ein weiterer Antriebsmotor 127 angeordnet. Es handelt sich wiederum um einen Servomotor, dessen Antriebsachse ist aber horizontal orientiert und verläuft mittig des Trägers 124 in Längsrichtung. Der Antriebsmotor 127 wirkt über ein Planetengetriebe 128 auf eine Spindel 129.1 eines Kugelgewindetriebs 129. Dieser umfasst weiter ein erstes Lager 129.2 im Linearschlitten 122 mit dem Antriebsmotor 127 und ein zweites Lager 129.3 im anderen Linearschlitten 121. Letzteres umfasst eine drehbar, aber axial unverschiebbar gelagerte Gewindehülse 129.4, die mit dem Aussengewinde der Spindel 129.1 zusammenwirkt, so dass sich der Abstand zwischen den beiden Linearschlitten 121, 122 mit Hilfe des Antriebsmotors 127 einstellen lässt.

Auf den Seitenflächen der Träger 123, 124 sind über entsprechende, in einem horizontalen Abstand angeordnete Drehlager je zwei gleich lange Hebel 134.1...8 angelenkt. Die Hebel sind an der Plattform 135 in seitlich in demselben horizontalen Abstand angeordneten Lagern angelenkt, so dass insgesamt vier Gelenkvierecke 136.1, 136.2, 136.3, 136.4 gebildet werden.

Auf der Oberseite der Plattform 135 sind zwei vertikal orientierte zylindrische Führungsbolzen 137.1, 137.2 angeordnet sowie drei ein Dreieck aufspannende Messzellen 138.1, 138.2, 138.3. Letztere sind als Scherstab-Messzellen ausgebildet. Die Krafteinleitungspunkte liegen jeweils nahe des seitlichen Randes der Plattform 135, der Einleitungspunkt der ersten Messzelle 138.1 ist in Längsrichtung mittig angeordnet, die Einleitungspunkte der weiteren Messzellen 138.2, 138.3 sind nahe der Längsenden der Plattform 135 angeordnet, so dass eine bestmögliche Kraftverteilung erreicht wird.

Die Figuren 4 und 5 zeigen die Hebeeinheit 120 im abgesenkten Zustand, d. h. die beiden Linearschlitten 121, 122 nehmen ihren maximalen Abstand ein, und die Plattform 135 ist minimal von der durch die Linearschlitten 121, 122 definierten Ebene entfernt. In der Figur 6 ist die Hebeeinheit 120 im maximal angehobenen Zustand gezeigt. Der Abstand zwischen den Linearschlitten 121, 122 ist kleiner, und der Abstand der Plattform 135 von der Ebene aufgrund des Hebelmechanismus mit den vier Gelenkvierecken 136.1...4 grösser. Die Höhe der Plattform 135 lässt sich somit durch Betätigung des Antriebsmotors 127 einstellen, wobei der maximale Hub ca. 80 mm beträgt. Die Hebeeinheit 120 kann zudem als Ganzes mit Hilfe des Antriebsmotors 131 entlang der Linearführung (d. h. parallel zu den Einlaufschienen) positioniert werden.

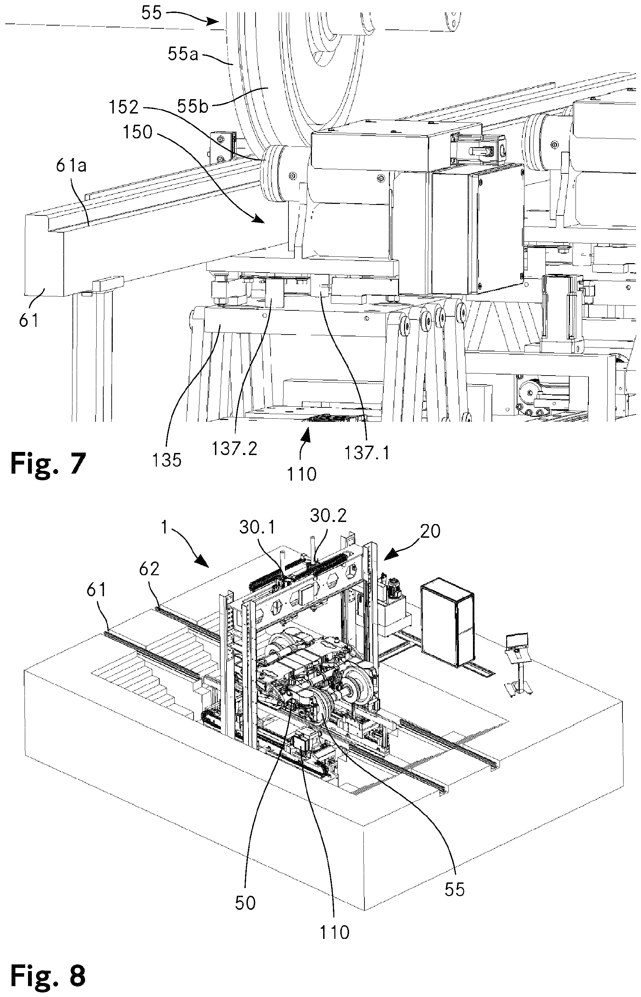

Die Figur 7 zeigt ein Schrägbild zur Veranschaulichung des Zusammenwirkens einer Einlaufschiene und der Radaufnahmeeinrichtung des Radträgers mit einem Laufrad des Drehgestells.

Die Radaufnahmeeinheit 150 des Radträgers 110 ist auf der Plattform 135 positioniert. Sie liegt dabei auf den drei Messzellen auf und wird durch die zwei Führungsbolzen 137.1, 137.2 geführt. Zu diesem Zweck weist die Radaufnahmeeinheit 150 auf ihrer Unterseite zwei Öffnungen auf, die etwas grösser dimensioniert sind als der Querschnitt der von ihnen aufgenommenen Führungsbolzen 137.1, 137.2. Ferner werden Tellerfedern eingesetzt, um die Radaufnahmeeinheit 150 mit ihren Öffnungen gegenüber den Führungsbolzen 137.1, 137.2 festzulegen.

Die Radträger 110 sind der Einlaufschiene 61 benachbart so angeordnet, dass die Rollen 152 der Radaufnahmeeinheiten 150 mit einer Lauffläche 55b des jeweiligen Rads 55 zusammenwirken können, während das Rad 55 mit seinem Spurkranz 55a auf einer Lauffläche 61a der Einlaufschiene 61 abrollt. Durch eine vertikale Bewegung der Radaufnahmeeinheit 150 lässt sich beeinflussen, ob und wie deren Rollen 152 mit dem Rad 55 zusammenwirken:
- in einer abgesenkten Position findet keine Interaktion zwischen den Rollen 152 der Radaufnahmeeinheit 150 und dem Rad 55 statt, und der entsprechende Radträger 110 lässt sich auch unterhalb des Rads 55 vorbeiführen;
- in einer mittleren Position kontaktieren die Rollen 152 der Radaufnahmeeinheit 150 die Lauffläche 55b des Rads 55, letzteres ist aber weiterhin über den Spurkranz 55a auf der Einlaufschiene 61 abgestützt - so kann mit Hilfe der Radträger 110 das Drehgestell entlang der Einlaufschiene 61 bewegt werden;
- in einer angehobenen Position ist das Rad 55 vollständig auf den Rollen 152 der Radaufnahmeeinheit 150 abgestützt; der Spurkranz 55a hat den Kontakt zur Einlaufschiene 61 verloren - in dieser Position können Kraftmessungen zur Prüfung des Drehgestells durchgeführt werden, weil alle auf das Rad 55 einwirkenden Kräfte über die Messzellen des Radträgers 110 übertragen werden.

Die Figur 8 zeigt ein Schrägbild des Prüfstands 1 mit dem Drehgestell 50 in der Prüfposition. In dieser Position lassen sich mit Hilfe der Lasteinwirkeinheiten 30.1, 30.2 vertikale Kräfte auf das Drehgestell 50 ausüben. Von den Rädern 55 des Drehgestells 50 auf die Radträger 110 ausgeübte Kräfte werden mit Hilfe der beschriebenen Messzellen in an sich bekannter Weise erfasst, an eine Auswerteeinrichtung übermittelt und dort ausgewertet.

Die Einbringung des Drehgestells 50 in die Prüfposition umfasst folgende Schritte:
1. Das Drehgestell 50 wird in einem Endbereich auf die Einlaufschienen 61, 62 gesetzt, so dass die Spurkränze der Räder 55 auf den Laufflächen der Einlaufschienen 61, 62 abrollen können. Das Aufsetzen kann beispielsweise mit Hilfe eines Krans erfolgen.
2. Die zwei dem Drehgestell 50 zugewandten Radträger 110 werden unter das Drehgestell 50 so verfahren, dass sie unterhalb der vorderen, dem Portal 20 zugewandten Räder 55 positioniert sind.
3. Die erwähnten zwei Radträger 110 werden angehoben, bis sie ihre mittlere Position erreichen, in der die Rollen der Radträger 110 mit den Laufflächen der Räder 55 zusammenwirken; die Räder 55 sind aber weiterhin mit ihren Spurkränzen auf den Einlaufschienen 61, 62 abgestützt.
4. Die erwähnten zwei Radträger 110 werden in Richtung des Portals 20 bewegt, zumindest bis sich auch die hinteren, dem Portal 20 abgewandten Räder 55 im Verfahrbereich der Radträger 110 befinden.
5. Alle Radträger 110 werden abgesenkt, so dass sie sich unterhalb des Drehgestells 50 entlang ihrer Führung parallel zu den Einlaufschienen 61, 62 bewegen können. Sie werden anschliessend zu den Positionen der vier Räder 55 des Drehgestells 50 bewegt.
6. Nun werden alle Radträger 110 in ihre mittlere Position angehoben. Alle Räder 55 des Drehgestells 50 interagieren nun mit jeweils einem Radträger 110.
7. Das Drehgestell 50 kann nun in eine axial zentrierte Position unterhalb des Portals 20 verfahren werden.
8. Nun werden alle Radträger 110 weiter angehoben, bis sich die Spurkränze der Räder 55 von den Einlaufschienen 61, 62 lösen. Die Kugelumlaufspindel der Hebeeinheit wird nun über die Motorbremse des entsprechenden Antriebsmotors fixiert, damit ist also auch die Höhe der Räder fixiert.
9. Das Drehgestell 50 kann nun noch quer zur Einlaufrichtung zentriert werden. Dazu werden die erwähnten Stössel in der Radaufnahmeeinrichtung bei Bedarf nach innen bewegt, um die Räder 55 an der Radschulter bis zur gewünschten Querposition zu schieben.
10. Die Antriebsmotoren für die Ritzel werden nun stromlos geschaltet, so dass sich die Radträger entlang ihrer Führungen frei bewegen können.
11. Nun kann die Einleitung der Kräfte erfolgen und die resultierenden Kräfte auf die Radträger können mit Hilfe der Messzellen erfasst werden. Änderungen des Achsabstands aufgrund der Krafteinwirkung werden kompensiert, indem sich die Radträger im Wesentlichen ungehindert entlang ihrer Führung bewegen können. Während des Messprozesses werden die Räder 55 mit Hilfe der angetriebenen Rollen der Radträger 110 gedreht, um statische Verbiegungen und Deformationen zu vermeiden.

Mit Hilfe der erfindungsgemässen Vorrichtung kann auch das Einfügen von Unterlegscheiben (shim plates) simuliert werden. Dazu werden diejenigen Radträger, bei denen das Einfügen einer Unterlegschreibe simuliert werden soll, weiter angehoben. Sobald sich eine ausgeglichene Lastverteilung ergibt, lassen sich aus der zusätzlichen Anhebung die Dicken der benötigten Unterlegscheiben berechnen. Auch eine Verwindungsprüfung ist möglich, indem die Radträger auf unterschiedliche Höhen angehoben werden.

Die erfindungsgemässe Vorrichtung ermöglicht eine einfache Kalibration der Messzellen und/oder der Lastwirkeinheiten, indem der entsprechende Radträger und eine Lasteinwirkeinheit aufeinander ausgerichtet werden und eine Referenz-Messzelle zwischen die Lasteinwirkeinheit und den Radträger eingebracht wird. Das System kann dann mit Hilfe der Lasteinwirkeinheit belastet werden, wobei die einwirkenden Kräfte von der Referenz-Messzelle und den Messzellen gemessen werden.

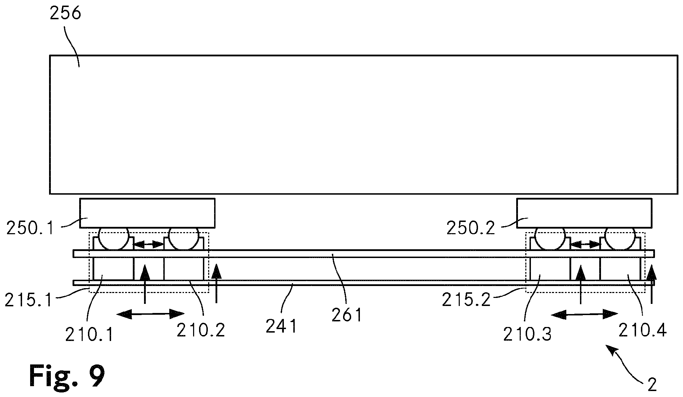

Die Figur 9 ist eine Schemazeichnung einer weiteren Ausführungsform des erfindungsgemässen Prüfstands. Diese entspricht in vielerlei Hinsicht der vorgängig beschriebenen Ausführungsform. Der Prüfstand 2 gemäss der weiteren Ausführungsform dient zur Verwindungsprüfung zweier an einem Wagenkasten 256 angebrachter Drehgestelle 250.1, 250.2. Der zu prüfende Wagen wird auf den Einlaufschienen 261 zu den Radträgern 210.1, 210.2, 210.3, 210.4 verfahren und dort von diesen wie oben beschrieben erfasst. Die Einwirkkraft auf die Drehgestelle 250.1, 250.2 wird vom Wagenkasten 256 selbst bereitgestellt. Die Verwindung wird durch eine unterschiedliche Höheneinstellung der Radträger 210.1, 210.2, 210.3, 210.4 (und der entsprechend spiegelbildlich auf der anderen Seite angeordneten weiteren vier Radträger) bewirkt. Der Prüfstand 2 lässt sich auf einfache Weise an die Dimensionen der Drehgestelle 250.1, 250.2 und des Wagenkastens 256 anpassen. Dazu werden zum einen die Abstände der Radträger 210.1, 210.2; 210.3, 210.4 der jeweiligen Radträgergruppe 215.1, 215.2 zueinander eingestellt und zum anderen der Abstand der beiden Radträgergruppen 215.1, 215.2, indem die Radträger 210.1...4 entlang der entsprechenden Profilschiene 241 verfahren werden.Die Erfindung ist nicht auf die dargestellten Ausführungsbeispiele beschränkt, soweit sie nicht vom Schutzbereich der Ansprüche abweicht.

So lassen sich insbesondere konstruktive Details anders lösen. Die Dimensionen des Prüfstands können unterschiedlich gewählt werden, in Abhängigkeit insbesondere der zu prüfenden Drehgestelle. Bei Drehgestellen mit mehr als vier Rädern können zusätzliche Radträger vorhanden sein.

Zusammenfassend ist festzustellen, dass die Erfindung einen Prüfstand zur Prüfung von Drehgestellen schafft, welcher eine einfache Konstruktion aufweist.

## Patentansprüche

1. Radträger (110.1, 110.2) zum Tragen eines an einem Drehgestell (250.1, 250.2) angeordneten Laufrades, wobei der Radträger (110.1, 110.2) eine Hebeeinheit (120.1, 120.2) umfasst mit folgenden Komponenten:
- einer Plattform (135.1, 135.2);
- einem ersten Linearschlitten (121.1, 121.2), der entlang einer sich in einer Laufrichtung senkrecht zur Einwirkrichtung erstreckenden Längsführung (140) verschiebbar ist;
**dadurch gekennzeichnet, dass** die Hebeeinheit weiter folgende Komponenten umfasst:
- einen zweiten Linearschlitten (122.1, 122.2), der in Laufrichtung entlang der Längsführung (140) verschiebbar ist;
- einen ersten Hebelmechanismus zum Koppeln des ersten Linearschlittens (121.1, 121.2) an die Plattform (135.1, 135.2); und
- einen zweiten Hebelmechanismus zum Koppeln des zweiten Linearschlittens (122.1, 122.2) an die Plattform (135.1, 135.2),
wobei ein Abstand zwischen dem ersten Linearschlitten (121.1, 121.2) und dem zweiten Linearschlitten (122.1, 122.2) veränderbar ist, so dass ein Abstand der Plattform (135.1, 135.2) vom ersten Linearschlitten (121.1, 121.2) und vom zweiten Linearschlitten (122.1, 122.2) in der Einwirkrichtung veränderbar ist.

2. Radträger (110.1, 110.2) nach Anspruch 1, **dadurch gekennzeichnet, dass** der erste Hebelmechanismus zwei Gelenkvierecke (136.1, 136.2) umfasst und dass der zweite Hebelmechanismus zwei weitere Gelenkvierecke (136.3, 136.4) umfasst, wobei sich die Hebelachsen aller Hebel (134.1...8) der Gelenkvierecke (136.1, 136.2, 136.3, 136.4) parallel zueinander und senkrecht zur Laufrichtung erstrecken.

3. Radträger (110.1, 110.2) nach Anspruch 2, **dadurch gekennzeichnet, dass** die zwei Gelenkvierecke (136.1, 136.2) des ersten Hebelmechanismus in einer Richtung der Hebelachsen voneinander beabstandet sind und dass die zwei Gelenkvierecke (136.3, 136.4) des zweiten Hebelmechanismus in einer Richtung der Hebelachsen voneinander beabstandet sind.

4. Radträger (110.1, 110.2) nach einem der Ansprüche 1 bis 3, **dadurch gekennzeichnet, dass** der erste Linearschlitten (121.1, 121.2) und der zweite Linearschlitten (122.1, 122.2) durch eine Einrichtung zur Verstellung ihres Abstands zueinander mechanisch miteinander verbunden sind.

5. Radträger (110.1, 110.2) nach Anspruch 4, **dadurch gekennzeichnet, dass** die Einrichtung zur Verstellung des Abstands eine
a) an einem der Linearschlitten (121, 122) drehbar und axial unverschiebbar gelagerte Gewindespindel, deren Drehachse sich in Laufrichtung erstreckt, und
b) einen drehbaren Mitnehmer, der am anderen der Linearschlitten (122, 121) angeordnet ist, umfasst.

6. Radträger (110.1, 110.2) nach Anspruch 5, **dadurch gekennzeichnet, dass** die Gewindespindel und der Mitnehmer einen Kugelgewindetrieb (129) bilden.

7. Radträger (110.1, 110.2) nach einem der Ansprüche 1 bis 6, **dadurch gekennzeichnet, dass** am ersten Linearschlitten (121.1, 121.2) ein Antriebsmotor (131) angeordnet ist, dessen Abtrieb auf ein Ritzel (133) wirkt, wobei das Ritzel (133) zum Verschieben des ersten Linearschlittens (121.1, 121.2) mit einer sich in Laufrichtung erstreckenden Zahnstange (145) zusammenwirkt.

8. Prüfstand (1) zur Prüfung von Drehgestellen (250.1, 250.2) von Schienenfahrzeugen, umfassend eine Tragvorrichtung (100) zum Tragen eines Drehgestells (250.1, 250.2) während eines Prüfungsvorgangs, umfassend mehrere Radträger (110.1, 110.2) zum Tragen jeweils eines am Drehgestell (250.1, 250.2) angeordneten Laufrades wobei der Radträger (110.1, 110.2) eine Hebeeinheit (120.1, 120.2) umfasst mit folgenden Komponenten:
- einer Plattform (135.1, 135.2);
- einem ersten Linearschlitten (121.1, 121.2), der entlang einer sich in einer Laufrichtung senkrecht zur Einwirkrichtung erstreckenden Längsführung (140) verschiebbar ist;
**dadurch gekennzeichnet, dass** die Hebeeinheit weiter folgende Komponenten umfasst:
- einen zweiten Linearschlitten (122.1, 122.2), der in Laufrichtung entlang der Längsführung (140) verschiebbar ist;
- einen ersten Hebelmechanismus zum Koppeln des ersten Linearschlittens (121.1, 121.2) an die Plattform (135.1, 135.2); und
- einen zweiten Hebelmechanismus zum Koppeln des zweiten Linearschlittens (122.1, 122.2) an die Plattform (135.1, 135.2),
wobei ein Abstand zwischen dem ersten Linearschlitten (121.1, 121.2) und dem zweiten Linearschlitten (122.1, 122.2) veränderbar ist, so dass ein Abstand der Plattform (135.1, 135.2) vom ersten Linearschlitten (121.1, 121.2) und vom zweiten Linearschlitten (122.1, 122.2) in der Einwirkrichtung veränderbar ist.

9. Prüfstand (1) nach Anspruch 8, umfassend eine Lasteinwirkeinheit zur Erzeugung einer linearen Einwirkkraft auf das Drehgestell (250.1, 250.2), umfassend eine Krafterzeugungseinheit zur Erzeugung einer Grundkraft und eine Übertragungseinrichtung zur Übertragung der Grundkraft in die in einer Einwirkrichtung ausgerichtete, auf das Drehgestell (250.1, 250.2) einwirkende Einwirkkraft.

10. Prüfstand (1) nach Anspruch 8, **dadurch gekennzeichnet, dass** die Tragvorrichtung (100) mindestens acht Radträger nach Anspruch 1 umfasst, um alle Laufräder mindestens zweier an einem Wagenkasten angeordneter Drehgestelle (250.1, 250.2) zu tragen.

11. Prüfstand (1) nach einem der Ansprüche 8 bis 10, **gekennzeichnet durch** zwei parallel angeordnete, sich in Laufrichtung erstreckende Einlaufschienen (61, 62) zur Zuführung des zu messenden Drehgestells (250.1, 250.2).

12. Prüfstand (1) nach Anspruch 11, **dadurch gekennzeichnet, dass** die Längsführung (140) und die Einlaufschienen (61, 62) derart angeordnet sind, dass auf den Plattformen (135) der Radträger (110.1, 110.2) angeordnete Radaufnahmeeinrichtungen (150, 150.1, 150.2) durch eine vertikale Bewegung der jeweiligen Plattform (135.1, 135.2) zwischen einer Eingriffsposition und einer Freigabeposition bewegbar sind, wobei in der Eingriffsposition Kräfte in Laufrichtung zwischen der jeweiligen Radaufnahmeeinrichtung (150, 150.1, 150.2) und dem jeweiligen Laufrad übertragbar sind, während in der Freigabeposition der jeweilige Radträger (110.1, 110.2) bezüglich des Drehgestells (250.1, 250.2) in Laufrichtung frei beweglich ist.

13. Prüfstand (1) nach einem der Ansprüche 8 bis 12, **dadurch gekennzeichnet, dass** jeder der Radträger (110.1, 110.2) eine auf der Plattform (135.1, 135.2) angeordnete Radaufnahmeeinrichtung (150, 150.1, 150.2) umfasst sowie eine Kraftmesseinheit zum Messen einer auf die Radaufnahmeeinrichtung (150, 150.1, 150.2) ausgeübten Kraft.

14. Verfahren zum Prüfen eines Drehgestells (250.1, 250.2) eines Schienenfahrzeugs, umfassend folgende Schritte:
a) Einfahren des Drehgestells (250.1, 250.2) entlang einer Laufrichtung, indem Spurkränze von am Drehgestell (250.1, 250.2) angeordneten Laufrädern auf zwei parallelen Einlaufschienen (61, 62) ablaufen;
**gekennzeichnet durch**
b) Positionieren des Drehgestells (250.1, 250.2) und mehrerer Radträger (110.1, 110.2) einer Tragvorrichtung (100) zueinander, entlang der Laufrichtung, so dass jedem der Laufräder ein Radträger (110.1, 110.2) zugeordnet ist, wobei jeder der Radträger (110.1, 110.2) eine Hebeeinheit (120.1, 120.2) umfasst mit einer Plattform (135.1, 135.2), einem ersten Linearschlitten (121.1, 121.2), der entlang einer sich in Laufrichtung erstreckenden Längsführung (140) verschiebbar ist, einem zweiten Linearschlitten (122.1, 122.2), der in Laufrichtung entlang der Längsführung (140) verschiebbar ist, einem ersten Hebelmechanismus zum Koppeln des ersten Linearschlittens (121.1, 121.2) an die Plattform (135.1, 135.2) und einem zweiten Hebelmechanismus zum Koppeln des zweiten Linearschlittens (122.1, 122.2) an die Plattform (135.1, 135.2);
c) Ergreifen des Drehgestells (250.1, 250.2), indem ein Abstand zwischen dem ersten Linearschlitten (121.1, 121.2) und dem zweiten Linearschlitten (122.1, 122.2) der Hebeeinheiten (120.1, 120.2) verringert wird, so dass die Radträger (110.1, 110.2) angehoben werden und die Laufräder im Bereich Ihrer Lauffläche ergreifen;
d) Anheben des Drehgestells (250.1, 250.2), bis die Spurkränze der Laufräder von den Einlaufschienen (61, 62) abgehoben sind;
e) Prüfen des Drehgestells (250.1, 250.2) durch Ausüben einer linearen Einwirkkraft auf das Drehgestell (250.1, 250.2), wobei die lineare Einwirkkraft senkrecht steht zur Laufrichtung, und Messen auf die Radträger (110.1, 110.2) einwirkender Kräfte.

15. Verfahren nach Anspruch 14, **dadurch gekennzeichnet, dass** für das Prüfen des Drehgestells (250.1, 250.2) alle Linearschlitten (121, 122) frei in Laufrichtung beweglich sind, während die Abstände zwischen den ersten Linearschlitten (121.1, 121.2) und den zweiten Linearschlitten (122.1, 122.2) jeweils eines Radträgers (110) fixiert sind.

16. Verfahren nach Anspruch 15, **dadurch gekennzeichnet, dass** bei jedem der Radträger (110.1, 110.2) am ersten Linearschlitten (121.1, 121.2) ein Antriebsmotor (131) angeordnet ist, dessen Abtrieb auf ein Ritzel (133) wirkt, wobei das Ritzel (133) zum Verschieben des ersten Linearschlittens (121.1, 121.2) mit einer sich in Laufrichtung erstreckenden Zahnstange zusammenwirkt, wobei für das Prüfen des Drehgestells (250.1, 250.2) das Ritzel (133) zur freien Rotation freigegeben wird, insbesondere indem ein elektrischer Antriebsmotor (131) für das Ritzel (133) stromlos geschaltet wird.

17. Verfahren nach einem der Ansprüche 14 bis 16, **dadurch gekennzeichnet, dass** durch eine individuelle Einstellung der Höhen der Radträger (110.1, 110.2) das Einfügen von Unterlegscheiben simuliert wird.

18. Verfahren nach einem der Ansprüche 14 bis 17, **gekennzeichnet durch** den zusätzlichen Schritt des Positionierens des Drehgestells (250.1, 250.2) durch Verfahren der Radträger (110.1, 110.2) entlang der Laufrichtung, in einer Einwirkposition einer Lasteinwirkeinheit, und **dadurch, dass** die lineare Einwirkkraft mittels der Lastwirkeinheit ausgeübt wird.

19. Verfahren nach einem der Ansprüche 14 bis 17, **dadurch gekennzeichnet, dass** zwei Drehgestelle (250.1, 250.2) an einem Wagenkasten angeordnet sind und alle Laufräder der zwei Drehgestelle (250.1, 250.2) gleichzeitig von entsprechenden Radträgern (110) aufgenommen werden, wonach eine Verwindungsprüfung durch eine Einstellung unterschiedlicher Höhen der Radträger (110.1, 110.2) erfolgt, wobei die lineare Einwirkkraft mittels eines Eigengewichts des Wagenkastens ausgeübt wird.

20. Verfahren nach Anspruch 19, **gekennzeichnet durch** den zusätzlichen Schritt des Einstellens eines Abstands zweier Gruppen von Radträgern (110) auf einen Abstand der Drehgestelle (250.1, 250.2) am Wagenkasten.

## Claims

1. Wheel carrier (110.1, 110.2) for supporting a running wheel arranged on a bogie (250.1, 250.2), wherein the wheel carrier (110.1, 110.2) comprises a lifting unit (120.1, 120.2) with the following components:
- a platform (135.1, 135.2);
- a first linear slide (121.1, 121.2) which is displaceable along a longitudinal guide (140) extending in a running direction perpendicular to the direction of action;
**characterized in that** the lifting unit further comprises the following components:
- a second linear slide (122.1, 122.2) which is displaceable in the running direction along the longitudinal guide (140);
- a first lever mechanism for coupling the first linear slide (121.1, 121.2) to the platform (135.1, 135.2); and
- a second lever mechanism for coupling the second linear slide (122.1, 122.2) to the platform (135.1, 135.2),
wherein a distance between the first linear slide (121.1, 121.2) and the second linear slide (122.1, 122.2) is variable, so that a distance of the platform (135.1, 135.2) from the first linear slide (121.1, 121.2) and from the second linear slide (122.1, 122.2) is variable in the direction of action.

2. Wheel carrier (110.1, 110.2) according to Claim 1, **characterized in that** the first lever mechanism comprises two four-bar linkages (136.1, 136.2) and **in that** the second lever mechanism comprises two further four-bar linkages (136.3, 136.4), wherein the lever axes of all levers (134.1.8) of the four-bar linkages (136.1, 136.2, 136.3, 136.4) extend parallel to one another and perpendicular to the running direction.

3. Wheel carrier (110.1, 110.2) according to Claim 2, **characterized in that** the two four-bar linkages (136.1, 136.2) of the first lever mechanism are spaced apart from one another in a direction of the lever axes, and **in that** the two four-bar linkages (136.3, 136.4) of the second lever mechanism are spaced apart from one another in a direction of the lever axes.

4. Wheel carrier (110.1, 110.2) according to one of Claims 1 to 3, **characterized in that** the first linear slide (121.1, 121.2) and the second linear slide (122.1, 122.2) are mechanically connected to one another by a device for adjusting their distance from one another.

5. Wheel carrier (110.1, 110.2) according to Claim 4, **characterized in that** the device for adjusting the distance comprises
a) a threaded spindle which is mounted rotatably and axially non-displaceably on one of the linear slides (121, 122) and the axis of rotation of which extends in the running direction, and
b) a rotatable driver which is arranged on the other of the linear slides (122, 121).

6. Wheel carrier (110.1, 110.2) according to Claim 5, **characterized in that** the threaded spindle and the driver form a ball screw drive (129).

7. Wheel carrier (110.1, 110.2) according to one of Claims 1 to 6, **characterized in that** a drive motor (131) is arranged on the first linear slide (121.1, 121.2), the output of which drive motor acts on a pinion (133), wherein the pinion (133) interacts with a toothed rack (145) which extends in the running direction in order to displace the first linear slide (121.1, 121.2).

8. Test stand (1) for testing bogies (250.1, 250.2) of rail vehicles, comprising a supporting apparatus (100) for supporting a bogie (250.1, 250.2) during a testing operation, comprising a plurality of wheel carriers (110.1, 110.2) for supporting in each case one running wheel arranged on the bogie (250.1, 250.2), wherein the wheel carrier (110.1, 110.2) comprises a lifting unit (120.1, 120.2) with the following components:
- a platform (135.1, 135.2);
- a first linear slide (121.1, 121.2) which is displaceable along a longitudinal guide (140) extending in a running direction perpendicular to the direction of action;
**characterized in that** the lifting unit further comprises the following components:
- a second linear slide (122.1, 122.2) which is displaceable in the running direction along the longitudinal guide (140);
- a first lever mechanism for coupling the first linear slide (121.1, 121.2) to the platform (135.1, 135.2); and
- a second lever mechanism for coupling the second linear slide (122.1, 122.2) to the platform (135.1, 135.2),
wherein a distance between the first linear slide (121.1, 121.2) and the second linear slide (122.1, 122.2) is variable, so that a distance of the platform (135.1, 135.2) from the first linear slide (121.1, 121.2) and from the second linear slide (122.1, 122.2) is variable in the direction of action.

9. Test stand (1) according to Claim 8, comprising a load-action unit for generating a linear force of action on the bogie (250.1, 250.2), comprising a force-generating unit for generating a basic force and a transmission device for transmitting the basic force into the force of action which is oriented in a direction of action and acts on the bogie (250.1, 250.2).

10. Test stand (1) according to Claim 8, **characterized in that** the supporting apparatus (100) comprises at least eight wheel carriers according to Claim 1, in order to support all running wheels of at least two bogies (250.1, 250.2) arranged on a wagon body.

11. Test stand (1) according to one of Claims 8 to 10, **characterized by** two run-in rails (61, 62), which are arranged in parallel and extend in the running direction, for feeding the bogie (250.1, 250.2) to be measured.

12. Test stand (1) according to Claim 11, **characterized in that** the longitudinal guide (140) and the run-in rails (61, 62) are arranged in such a way that wheel receiving devices (150, 150.1, 150.2) arranged on the platforms (135) of the wheel carriers (110.1, 110.2) are movable between an engagement position and a release position by a vertical movement of the respective platform (135.1, 135.2), wherein, in the engagement position, forces can be transmitted in the running direction between the respective wheel receiving device (150, 150.1, 150.2) and the respective running wheel, while, in the release position, the respective wheel carrier (110.1, 110.2) is freely movable in the running direction with respect to the bogie (250.1, 250.2).

13. Test stand (1) according to one of Claims 8 to 12, **characterized in that** each of the wheel carriers (110.1, 110.2) comprises a wheel receiving device (150, 150.1, 150.2) arranged on the platform (135.1, 135.2) and a force-measuring unit for measuring a force exerted on the wheel receiving device (150, 150.1, 150.2) .

14. Method for testing a bogie (250.1, 250.2) of a rail vehicle, comprising the following steps:
a) running in the bogie (250.1, 250.2) along a running direction, in that wheel flanges of running wheels arranged on the bogie (250.1, 250.2) run on two parallel run-in rails (61, 62);
**characterized by**
b) positioning the bogie (250.1, 250.2) and a plurality of wheel carriers (110.1, 110.2) of a supporting apparatus (100) with respect to one another, along the running direction, such that a wheel carrier (110.1, 110.2) is assigned to each of the running wheels, wherein each of the wheel carriers (110.1, 110.2) comprises a lifting unit (120.1, 120.2) with a platform (135.1, 135.2), a first linear slide (121.1, 121.2) which is displaceable along a longitudinal guide (140) extending in the running direction, a second linear slide (122.1, 122.2) which is displaceable in the running direction along the longitudinal guide (140), a first lever mechanism for coupling the first linear slide (121.1, 121.2) to the platform (135.1, 135.2) and a second lever mechanism for coupling the second linear slide (122.1, 122.2) to the platform (135.1, 135.2);
c) grasping the bogie (250.1, 250.2) by reducing a distance between the first linear slide (121.1, 121.2) and the second linear slide (122.1, 122.2) of the lifting units (120.1, 120.2), such that the wheel carriers (110.1, 110.2) are lifted and grasp the running wheels in the region of their running surface;
d) lifting the bogie (250.1, 250.2) until the wheel flanges of the running wheels are lifted from the run-in rails (61, 62);
e) testing the bogie (250.1, 250.2) by exerting a linear force of action on the bogie (250.1, 250.2), wherein the linear force of action is perpendicular to the running direction, and measuring forces acting on the wheel carriers (110.1, 110.2).

15. Method according to Claim 14, **characterized in that**, for the testing of the bogie (250.1, 250.2), all linear slides (121, 122) are freely movable in the running direction, while the distances between the first linear slides (121.1, 121.2) and the second linear slides (122.1, 122.2) of in each case one wheel carrier (110) are fixed.

16. Method according to Claim 15, **characterized in that**, in each of the wheel carriers (110.1, 110.2), a drive motor (131) is arranged on the first linear slide (121.1, 121.2), the output of which drive motor acts on a pinion (133), wherein the pinion (133) interacts with a toothed rack which extends in the running direction in order to displace the first linear slide (121.1, 121.2), wherein, for the testing of the bogie (250.1, 250.2), the pinion (133) is released for free rotation, in particular by an electric drive motor (131) for the pinion (133) being switched without current.

17. Method according to one of Claims 14 to 16, **characterized in that** the insertion of shims is simulated by an individual setting of the heights of the wheel carriers (110.1, 110.2).

18. Method according to one of Claims 14 to 17, **characterized by** the additional step of positioning the bogie (250.1, 250.2) by moving the wheel carriers (110.1, 110.2) along the running direction, in a position of action of a load-action unit, and in that the linear force of action is exerted by means of the load-action unit.

19. Method according to one of Claims 14 to 17, **characterized in that** two bogies (250.1, 250.2) are arranged on a wagon body and all running wheels of the two bogies (250.1, 250.2) are received at the same time by corresponding wheel carriers (110), after which a torsion test is carried out by setting different heights of the wheel carriers (110.1, 110.2), wherein the linear force of action is exerted by means of a dead weight of the wagon body.

20. Method according to Claim 19, **characterized by** the additional step of setting a distance between two groups of wheel carriers (110) to a distance between the bogies (250.1, 250.2) on the wagon body.

## Revendications

1. Support de roue (110.1, 110.2), destiné à porter une roue placée sur un boggie (250.1, 250.2), le support de roue (110.1, 110.2) comprenant une unité de levage (120.1, 120.2) présentant les composants suivants :
- une plateforme (135.1, 135.2) ;
- un premier chariot linéaire (121.1, 121.2), qui est déplaçable le long d'un guidage linéaire (140), s'étendant dans une direction de déplacement à la perpendiculaire de la direction d'action ;
**caractérisé en ce que** l'unité de levage comprend par ailleurs les composants suivants:
- un deuxième chariot linéaire (122.1, 122.2), qui est déplaçable dans la direction de déplacement, le long du guidage linéaire (140) ;
- un premier mécanisme à levier, destiné à accoupler le premier chariot linéaire (121.1, 121.2) avec la plateforme (135.1, 135.2) ; et
- un deuxième mécanisme à levier, destiné à accoupler le deuxième chariot linéaire (122.1, 122.2) avec la plateforme (135.1, 135.2),
un écart entre le premier chariot linéaire (121.1, 121.2) et le deuxième chariot linéaire (122.1, 122.2) étant variable, de sorte qu'un écart entre la plateforme (135.1, 135.2) et le premier chariot linéaire (121.1, 121.2) et le deuxième chariot linéaire (122.1, 122.2) dans la direction d'action soit variable.

2. Support de roue (110.1, 110.2) selon la revendication 1, **caractérisé en ce que** le premier mécanisme à levier comprend deux quadrilatères articulés (136.1, 136.2) et **en ce que** le deuxième mécanisme à levier comprend deux quadrilatères articulés (136.3, 136.4) supplémentaires, les axes de levier de tous les leviers (134.1, ...8) des quadrilatères articulés (136.1, 136.2, 136.3, 136.4) s'étendant à la parallèle les uns des autre et à la perpendiculaire de la direction de déplacement.

3. Support de roue (110.1, 110.2) selon la revendication 2, **caractérisé en ce que** les deux quadrilatères articulés (136.1, 136.2) du premier mécanisme à levier sont écartés l'un de l'autre dans une direction des axes de levier et **en ce que** les deux quadrilatères articulés (136.3, 136.4) du deuxième mécanisme à levier sont écartés l'un de l'autre dans une direction des axes de levier.

4. Support de roue (110.1, 110.2) selon l'une quelconque des revendications 1 à 3, **caractérisé en ce que** le premier chariot linéaire (121.1, 121.2) et le deuxième chariot linéaire (122.1, 122.2) sont assemblés mécaniquement par un système destiné à ajuster leur écart mutuel.

5. Support de roue (110.1, 110.2) selon la revendication 4, **caractérisé en ce que** le système destiné à ajuster l'écart comprend
a) une broche filetée, logée en rotation et de manière indéplaçable en direction axiale sur l'un des chariots linéaires (121, 122), dont l'axe de rotation s'étend dans la direction de déplacement et
b) un entraîneur rotatif, qui est placé sur l'autre des chariots linéaires (122, 121).

6. Support de roue (110.1, 110.2) selon la revendication 5, **caractérisé en ce que** la broche filetée et l'entraîneur forment une vis à billes (129).

7. Support de roue (110. 1, 110.2) selon l'une quelconque des revendications 1 à 6, **caractérisé en ce que** sur le premier chariot linéaire (121.1, 121.2) est placé un moteur d'entraînement (131) dont la prise de force agit sur un pignon (133), pour déplacer le premier chariot linéaire (121.1, 121.2), le pignon (133) interagissant avec une crémaillère (145) qui s'étend dans la direction de déplacement.

8. Banc d'essai (1), destiné à tester des boggies (250.1, 250.2) de wagons ferroviaires, comprenant un dispositif de support (100), destiné à porter un boggie (250.1, 250.2) pendant un processus de test, comprenant plusieurs supports de roue (110.1, 110.2) pour porter chacun une roue placée sur le boggie (250. 1, 250.2), le support de roue (110.1, 110.2) comprenant une unité de levage (120.1, 120.2), présentant les composants suivants :
- une plateforme (135.1, 135.2) ;
- un premier chariot linéaire (121.1, 121.2), qui est déplaçable le long d'un guidage linéaire (140), s'étendant dans une direction de déplacement à la perpendiculaire de la direction d'action ;
**caractérisé en ce que** l'unité de levage comprend par ailleurs les composants suivants:
- un deuxième chariot linéaire (122.1, 122.2), qui est déplaçable dans la direction de déplacement, le long du guidage linéaire (140) ;
- une premier mécanisme à levier, destiné à accoupler le premier chariot linéaire (121.1, 121.2) avec la plateforme (135.1, 135.2) ; et
- un deuxième mécanisme à levier, destiné à accoupler le deuxième chariot linéaire (122.1, 122.2) avec la plateforme (135.1, 135.2),
un écart entre le premier chariot linéaire (121.1, 121.2) et le deuxième chariot linéaire (122.1, 122.2) étant variable, de sorte qu'un écart entre la plateforme (135.1, 135.2) et le premier chariot linéaire (121.1, 121.2) et le deuxième chariot linéaire (122.1, 122.2) dans la direction d'action soit variable.

9. Banc d'essai (1) selon la revendication 8, comprenant une unité d'action de charge, destinée à générer une charge d'action linéaire sur le boggie (250.1, 250.2), comprenant une unité de génération de force destinée à générer une force fondamentale et un système de transmission, destiné à transmettre la force fondamentale dans la force d'action orientée dans une direction d'action, agissant sur le boggie (250.1, 250.2).

10. Banc d'essai (1) selon la revendication 8, **caractérisé en ce que** le dispositif de support (100) comprend au moins huit supports de roue selon la revendication 1, destinés à porter toutes les roues d'au moins deux boggies (250.1, 250.2) placés sur un châssis de wagon.

11. Banc d'essai (1) selon l'une quelconque des revendications 8 à 10, **caractérisé par** deux rails d'entrée (61, 62), placés à la parallèle, s'étendant dans la direction de déplacement, destinés à amener le boggie (250.1, 250.2) qui doit être mesuré.

12. Banc d'essai (1) selon la revendication 11, **caractérisé en ce que** le guidage linéaire (140) et les rails d'entrée (61, 62) sont placés de telle sorte que des systèmes récepteurs de roue (150, 150.1, 150.2) placés sur les plateformes (135) des supports de roue (110.1, 110.2) soient déplaçables par un mouvement vertical de la plateforme (135.1, 135.2) concernée entre une position d'engagement et une position de libération, dans la position d'engagement, des forces étant transmissibles dans la direction de déplacement, entre le système récepteur de roue (150, 150.1, 150.2) concerné et la roue concernée, alors que dans la position de libération, le support de roue (110.1, 110.2) est librement mobile dans la direction de déplacement, par rapport au boggie (250.1, 250.2).

13. Banc d'essai (1) selon l'une quelconque des revendications 8 à 12, **caractérisé en ce que** chacun des supports de roue (110. 1, 110.2) comprend un système récepteur de roue (150, 150.1, 150.2) placé sur la plateforme (135.1, 135.2), ainsi qu'une unité de mesure de la force, destinée à mesurer une force exercée sur le système récepteur de roue (150, 150. 1, 150.2).

14. Procédé, destiné à tester un boggie (250.1, 250.2) d'un wagon ferroviaire, comprenant les étapes suivantes, consistant à :
a) faire entrer le boggie (250.1, 250.2) le long d'une direction de déplacement, en ce que des boudins de roues placées sur le boggie (250.1, 250.2) roulent sur deux rails d'entrée (61, 62) parallèles ;
**caractérisé par**
b) le positionnement les uns par rapport aux autres du boggie (250.1, 250.2) et de plusieurs supports de roue (110.1, 110.2) d'un dispositif de support (100) le long de la direction de déplacement, de sorte qu'à chacune des roues soit associé un support de roue (110.1, 110.2), chacun des supports de roue (110.1, 110.2) comprenant une unité de levage (120.1, 120.2) pourvue d'une plateforme (135.1, 135.2), d'un premier chariot linéaire (121.1, 121.2), qui est déplaçable le long d'un guidage linéaire (140) s'étendant dans la direction de déplacement, d'un deuxième chariot linéaire (122.1, 122.2), qui est déplaçable le long du guidage linéaire (140) dans la direction de déplacement, d'un premier mécanisme à levier, destiné à accoupler le premier chariot linéaire (121.1, 121.2) avec la plateforme (135.1, 135.2) et d'un deuxième mécanisme à levier, destiné à accoupler le deuxième chariot linéaire (122.1, 122.2) avec la plateforme (135.1, 135.2);
c) la saisie du boggie (250.1, 250.2), par réduction d'un écart entre le premier chariot linéaire (121.1, 121.2) et le deuxième chariot linéaire (122.1, 122.2) des unités de levage (120.1, 120.2), de telle sorte que les supports de roue (110.1, 110.2) soient relevés et saisissent les roues dans la zone de leur surface de roulement ;
d) le relèvement des boggies (250.1, 250.2), jusqu'à ce que les boudins de roues soient relevés des rails d'entrée (61, 62) ;
e) le test des boggies (250.1, 250.2), par l'exercice d'une force d'action linéaire sur le boggie (250.1, 250.2), la force d'action linéaire étant disposée à la perpendiculaire de la direction de déplacement et la mesure des forces agissant sur les supports de roue (110.1, 110.2).

15. Procédé selon la revendication 14, **caractérisé en ce que** pour le test des boggies (250.1, 250.2), tous les chariots linéaires (121, 122) sont librement mobiles dans la direction de déplacement, alors que les écarts entre le premier chariot linéaire (121.1, 121.2) et le deuxième chariot linéaire (122.1, 122.2) de chaque fois un support de roues (110) sont fixés.

16. Procédé selon la revendication 15, **caractérisé en ce que** sur chaque support de roue (110.1, 110.2) est placé sur le premier chariot linéaire (121.1, 121.2) un moteur d'entraînement (131) dont la prise de force agit sur un pignon (133), pour déplacer le premier chariot linéaire (121.1, 121.2), le pignon (133) interagissant avec une crémaillère qui s'étend dans la direction de déplacement, pour tester le boggie (250.1, 250.2), le pignon (133) étant libéré en rotation libre, notamment par mise hors tension d'un moteur d'entraînement (131) électrique pour le pignon (133).

17. Procédé selon l'une quelconque des revendications 14 à 16, **caractérisé en ce que** par un réglage individuel des hauteurs des supports de roue (110.1, 110.2), l'on simule l'insertion de rondelles plates.

18. Procédé selon l'une quelconque des revendications 14 à 17, **caractérisé par** l'étape supplémentaire consistant à positionner le boggie (250.1, 250.2) par un déplacement des support de roue (110.1, 110.2) le long de la direction de déplacement, dans une position d'action permettant l'action d'une force, suite à quoi, la force d'action linéaire est exercée au moyen de l'unité d'action de force.

19. Procédé selon l'une quelconque des revendications 14 à 17, **caractérisé en ce que** deux boggies (250.1, 250.2) sont placés sur un châssis de wagon et **en ce que** toutes les roues des deux boggies (250.1, 250.2) sont réceptionnées simultanément par des supports de roue (110) correspondants, suite à quoi a lieu un test de voilage, par le réglage de différentes hauteurs des supports de roue (110.1, 110.2), la force d'action linéaire étant exercée au moyen d'un poids propre du châssis de wagon.

20. Procédé selon la revendication 19, **caractérisé par** l'étape supplémentaire consistant à régler un écart entre deux groupes de supports de roue (110) par rapport à un écart entre les boggies (250.1, 250.2) sur le châssis de wagon.
